# EUROPEAN PATENT SPECIFICATION

(11) **EP 3 404 222 B1**
(45) Date of publication and mention of the grant of the patent: **24.04.2024**
(21) Application number: 18162224.2
(22) Date of filing: 16.03.2018
(51) Int. Cl.: F01K 23/10, F22G 5/12, F02C 3/04, F02C 6/18, F02C 9/50, H02K 7/18

(54) **SYSTEMS AND METHODS FOR OPERATING A COMBINED CYCLE POWER PLANT**
SYSTEME UND VERFAHREN ZUM BETREIBEN EINES KOMBIKRAFTWERKS
SYSTÈMES ET PROCÉDÉS DE FONCTIONNEMENT D'UNE CENTRALE ÉLECTRIQUE À CYCLE COMBINÉ

(30) Priority: 21.03.2017 US 201715464955
(43) Date of publication of application: 21.11.2018
(73) Proprietor: General Electric Technology GmbH, 5400 Baden (CH)
(72) Inventor: MATHAI, George Vargese, Atlanta, GA Georgia 30339 (US); WILLIAMS, Jeremy, Jupiter, GA Georgia 33458 (US); KLOSINSKI, Joseph Philip, Atlanta, GA Georgia 30339 (US); EKANAYAKE, Sanji, Atlanta, GA Georgia 30339 (US); FISHER, William, Atlanta, GA Georgia 30339 (US); SCIPIO, Alston, Atlanta, GA Georgia 30339 (US)
(74) Representative: Novagraaf Group

(56) References cited:
- DE-A1-102010 040 624
- DE-A1-102013 202 249
- US-A1- 2009 145 104
- US-A1- 2012 131 917
- US-A1- 2013 318 985
- US-A1- 2016 138 428
- US-B1- 6 766 646

## Description

### FIELD OF THE INVENTION

This invention relates to power plants, and more particularly, to systems and methods for operating a combined cycle power plant.

### BACKGROUND OF THE INVENTION

A combined cycle power plant typically includes a gas turbine, a heat recovery system, and a steam turbine. The gas turbine burns a compressed air-fuel mixture that is moved past turbine blades in the gas turbine to make the turbine blades spin. Movement of the turbine blades causes a shaft of the gas turbine to rotate, which in turn drives a generator that generates electricity. The heat recovery system captures exhaust heat from the gas turbine and creates steam that is delivered to a steam turbine. The steam turbine drives the generator to produce additional electricity.

The amount of electricity generated by the combined cycle power plant can be varied in accordance with the amount of electricity drawn by what is referred to as a load. The term "load" refers to various types of elements such as household appliances and commercial/industrial equipment that operate using electricity provided by the combined cycle power plant. Typically, the amount of electricity provided by the combined cycle power plant closely tracks the load. However, for various reasons, it is impractical to vary the operation of the gas turbine and/or the steam turbine too often and/or too rapidly. Consequently, in several traditional systems, an operational balance is struck by adjusting certain operations of the combined cycle power plant, for example, by modifying an operation of the heat recovery system.

However, adjusting the operation of the heat recovery system can be a difficult procedure in view of conflicting requirements such as avoiding generation of superheated steam while concurrently preventing exhaust emissions from the gas turbine from exceeding allowable regulatory limits and preventing exhaust gas temperature from the gas turbine from exceeding allowable heat recovery steam generator material capability limits. Traditionally, such adjustments have been carried out by using empirical data and sub-optimal configurations. One example of a sub-optimal configuration can include monitoring various parameters of the gas turbine (such as air flow rate and exhaust temperature) and of the heat recovery system (such as steam temperature, water flow rate etc.) in an independent manner and adjusting these parameters without taking into consideration adverse effects such actions may have upon the operations of some other components of the combined cycle power plant.

US 2013/318985 discloses a combined cycle power plant including a gas turbine comprising a feed forward signal generator and configured to operate in one of one or more firing modes and generate exhaust gas and a heat recovery steam generator configured to receive the exhaust gas and extract thermal energy from the exhaust gas to generate steam. The feed forward signal generator is configured to generate a feed forward signal that is used to control the temperature of the steam generated by the heat recovery steam generator. US 2012/131917 suggests a method including receiving a turbine loading factor, receiving a current steam turbine exhaust temperature, determining a steam flow ramping rate parameter and a steam temperature ramping rate parameter based at least in part on the turbine loading factor and the current steam turbine exhaust temperature. The steam flow ramping rate parameter and the steam temperature ramping rate parameter are determined based at least in part on an inverse relationship between the steam flow ramping rate parameter and the steam temperature ramping rate parameter. The method may further include controlling at least one of a steam flow to the steam turbine based at least in part on the steam flow ramping rate parameter and a steam temperature to the steam turbine based at least in part on the steam temperature ramping rate parameter.

### BRIEF DESCRIPTION OF THE INVENTION

The invention as herein claimed relates to the subject matter as set forth in the claims.

Embodiments useful for appreciating the invention are directed generally to systems and methods for operating a combined cycle power plant. In certain embodiments, systems and methods can be provided for automatically configuring a combined cycle power plant to operate relatively efficiently.

According to one exemplary embodiment useful for appreciating the invention, a combined cycle power plant can include a gas turbine, a heat recovery steam generator, a steam turbine, and a control system. The heat recovery steam generator is coupled to the gas turbine and includes an attemperator that dispenses a fluid at a spray rate determined by a loading condition of the combined cycle power plant. The steam turbine is coupled to the heat recovery steam generator and is configured to receive steam generated in the heat recovery steam generator. The control system is configured to detect the spray rate and to automatically adjust a heat rate of the combined cycle power plant, via adjustment of gas turbine air flow rate and exhaust temperature within allowable limitations, in accordance with the spray rate and the loading condition of the combined cycle power plant.

According to another exemplary embodiment useful for appreciating the invention, a method of operating a combined cycle power plant includes detecting a first spray rate of a fluid in an attemperator when the combined cycle power plant is operating under a full load condition; operating a control system to set a first heat rate of the combined cycle power plant in accordance with the first spray rate, the first heat rate and the first spray rate allowing the combined cycle power plant to operate in the full load condition and within operating specifications of the combined cycle power plant; detecting a second spray rate of the fluid in the attemperator when the combined cycle power plant is operating under a full turndown condition; and operating the control system to automatically change the first heat rate of the combined cycle power plant to at least a second heat rate, the second heat rate and the second spray rate allowing the combined cycle power plant to operate in the full turndown condition and within operating specifications of the combined cycle power plant.

According to yet another exemplary embodiment useful for appreciating the invention, a non-transitory computer-readable storage medium contains instructions executable by at least one computer for performing operations that include detecting a first spray rate of a fluid in an attemperator when a combined cycle power plant is operating under a full load condition; operating a control system to set a first heat rate of the combined cycle power plant in accordance with the first spray rate, the first heat rate and the first spray rate allowing the combined cycle power plant to operate under the full load condition and within operating specifications of the combined cycle power plant; detecting at least a second spray rate of the fluid in the attemperator when the combined cycle power plant is operating under a full turndown condition; and operating the control system to automatically change the first heat rate of the combined cycle power plant to at least a second heat rate, the second heat rate and the second spray rate allowing the combined cycle power plant to operate under the full turndown condition with no interruption and within operating specifications of the combined cycle power plant.

Other embodiments and aspects of the invention will become apparent from the following description taken in conjunction with the following drawings.

### BRIEF DESCRIPTION OF THE DRAWINGS

Having thus described the invention in general terms, reference will now be made to the accompanying drawings, which are not necessarily drawn to scale, and wherein:
FIG. 1 illustrates a combined cycle power plant that includes a control system for automatically controlling various elements of the combined cycle power plant in accordance with an exemplary embodiment of the herein claimed invention.
FIG. 2 illustrates some example components of a gas turbine and a heat recovery steam generator that can be part of the combined cycle power plant shown in FIG. 1.
FIG. 3 illustrates some additional example components of the combined cycle power plant shown in FIG. 1.
FIG. 4 shows an example graphical representation that illustrates a relationship between electrical power output and allowable exhaust temperatures of an example gas turbine that can be part of the combined cycle power plant shown in FIG. 1.
FIG. 5 shows an example graphical representation that illustrates a difference between a traditional control configuration and a model-based control configuration that is in accordance with an exemplary embodiment of the herein claimed invention.
FIG. 6 illustrates an exemplary implementation of the control system shown in FIG. 1.

The invention will be described more fully hereinafter with reference to the accompanying drawings, in which exemplary embodiments of the disclosure are shown. The invention may, however, be embodied in many different forms and should not be construed as limited to the exemplary embodiments set forth herein; rather, these embodiments are provided so that this disclosure will satisfy applicable legal requirements. Like numbers refer to like elements throughout. It should be understood that certain words and terms are used herein solely for convenience and such words and terms should be interpreted as referring to various objects and actions that are generally understood in various forms and equivalencies by persons of ordinary skill in the art. For example, the words "heat rate" as used herein pertains to a measure of system efficiency in a power plant such as the combined cycle power plant referred to in this disclosure. The heat rate (typically in Btu/kWh) can be generally defined as an amount of energy provided to a system (typically in MBtu/h) divided by the amount of electricity generated (typically in kW). Efficiency is simply the inverse of the heat rate. Consequently, it can be understood that the efficiency of a power plant can be increased by lowering the heat rate. As another example, the word "example" as used herein is intended to be non-exclusionary and non-limiting in nature. More particularly, the word "exemplary" as used herein indicates one among several examples, and it should be understood that no undue emphasis or preference is being directed to the particular example being described.

### DETAILED DESCRIPTION OF THE INVENTION

In terms of a general overview, certain embodiments of the systems and methods described in this invention are directed to systems and methods for operating a combined cycle power plant. Certain embodiments of the herein claimed invention are directed to a combined cycle power plant incorporating a control system that uses a holistic approach to continuously and automatically adjust a heat rate of the combined cycle power plant to operate relatively efficiently. In accordance with one embodiment of the herein claimed invention, the control system can be used to dynamically control various operations of the combined cycle power plant, such as control of gas turbine air flow rate and exhaust temperature, in order to address certain conflicting requirements such as avoiding generation of saturated steam in a steam line while concurrently maintaining exhaust emissions and gases within allowable regulatory and material capability limits. The use of such a control system allows for an increased turndown capability of the combined cycle power plant along with an improvement in a combined cycle heat rate of the combined cycle power plant.

It should be understood that in contrast to the systems and methods described in this disclosure, many traditional systems carry out adjustments by either using empirical data or sub-optimal configurations. One example of a sub-optimal configuration can include monitoring various parameters of a heat recovery system (such as steam temperature, water flow rate etc.) in an independent manner and adjusting these parameters without taking into consideration adverse effects such actions may have upon the operations of some other components of the combined cycle power plant. In some other cases, a feedwater spray of an attemperator in the heat recovery system may be unable to provide an adequate amount of water (or may provide feedwater too close to the saturation limit of steam) when the combined cycle heat rate is operating under a partial load condition. Manual intervention may be needed in order to address this condition, which can be detrimental to the operation of a combined cycle power plant.

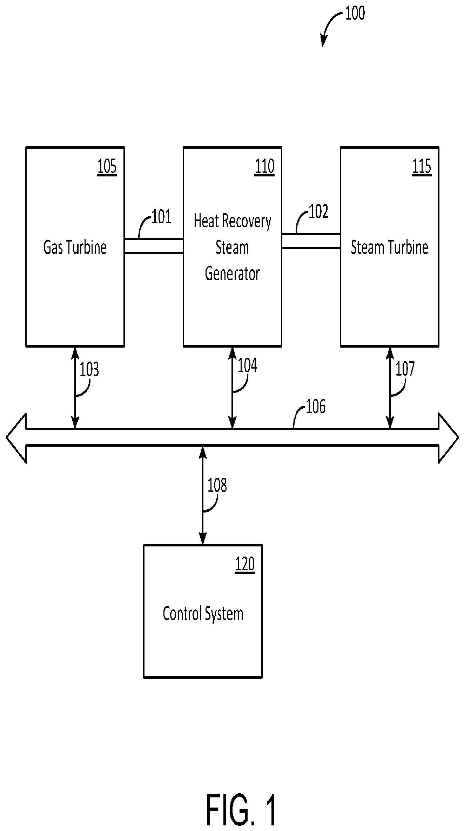

Turning to FIG. 1, a combined cycle power plant **100** is shown that includes a control system **120** for integrated control of various elements of the combined cycle power plant **100** in accordance with an exemplary embodiment of the herein claimed invention. The various elements of the combined cycle power plant **100** can include a gas turbine **105,** a heat recovery steam generator **110,** a steam turbine **115,** and a control system **120.** When in operation, the gas turbine **105** burns a compressed air-fuel mixture that is moved past turbine blades in the gas turbine **105** in order to make the turbine blades rotate or otherwise move about a shaft or axis. The rotation or movement of the turbine blades causes a shaft (not shown) of the gas turbine **105** to rotate, which in turn drives a generator (not shown) that generates electricity.

Exhaust gases from the gas turbine **105** are delivered through a conduit **101** to the heat recovery steam generator **110.** The heat recovery steam generator **110** generates steam that is delivered through a conduit **102** to the steam turbine **115.** An attemperator (not shown) is used for temperature control in the heat recovery steam generator **110.** The steam generated by the heat recovery steam generator **110** is used to operate the steam turbine **115** and generate additional electricity (in addition to the electricity generated by the generator in the gas turbine **105).**

In accordance with this exemplary embodiment, the control system **120** is communicatively coupled to at least the gas turbine **105,** the heat recovery steam generator **110,** and the steam turbine **115** via a communication network that can include a bus **106** and several links. In other embodiments, other non-bus oriented communication networks can be used. The various links, some of which can be unidirectional and others bidirectional in nature can carry various types of signals and/or data. For example, various sensors located in the gas turbine **105** can provide data pertaining to various conditions present in the gas turbine **105** when the combined cycle power plant **100** is in operation. For example, one or more temperature sensors can provide thermal data pertaining to temperature levels in various parts of the gas turbine **105,** one or more pressure sensors can provide pressure-related data in various parts of the gas turbine **105,** one or more speed sensors can provide speed-related data of various components of the gas turbine **105,** and so on. The data provided by the sensors in the gas turbine **105** can be conveyed to the control system **120** via the link **103,** the bus **106,** and the link **108.** It should be understood that the link **103** shown in FIG. 1 pictorially represents several data-carrying links, several control signal links, and/or communication links. The control system **120** can use the sensor data to generate one or more control signals that are conveyed in the opposite direction via the link **108,** the bus **106,** and the link **103,** to the gas turbine **105** for controlling certain elements in the gas turbine **105.** For example, a temperature-related control signal can be provided to a fuel control system in the gas turbine **105** so as to reduce an amount of air-fuel mixture injected into the gas turbine **105,** thereby modifying the exhaust gas temperature in the gas turbine **105.**

Similarly, various sensors located in the heat recovery steam generator **110** can provide data pertaining to various conditions present in the heat recovery steam generator **110** when the combined cycle power plant **100** is in operation. For example, one or more temperature sensors can provide thermal data pertaining to steam generated in the heat recovery steam generator **110.** The thermal data provided by the temperature sensors in the heat recovery steam generator **110** can be conveyed to the control system **120** via the link **104,** the bus **106,** and the link **108.** It should be understood that the link **104** and the link **108** shown in FIG. 1 pictorially represent several data-carrying links, several control signal links, and/or communication links. The control system **120** can use the thermal data to generate one or more control signals that are conveyed in the opposite direction via the link **108,** the bus **106,** and the link **104,** to the heat recovery steam generator **110** for controlling an attemperator (not shown).

Various sensors located in the steam turbine **115** can provide data pertaining to various conditions present in the steam turbine **115** when the combined cycle power plant **100** is in operation. For example, one or more speed sensors can provide speed-related data pertaining to a rotation speed of the steam turbine **115.** The speed-related data provided by the speed sensors in the steam turbine **115** can be conveyed to the control system **120** via the link **107,** the bus **106,** and the link **108.** It should be understood that the link **107** shown in FIG. 1 pictorially represents several data-carrying links, several control signal links, and/or communication links. The control system **120** can use the speed-related data to generate a speed-related control signal that can be provided to a steam inlet valve controller in the steam turbine **115** so as to reduce an amount of steam provided to the steam turbine **115,** thereby modifying a speed of rotation of the blades in the steam turbine **115.**

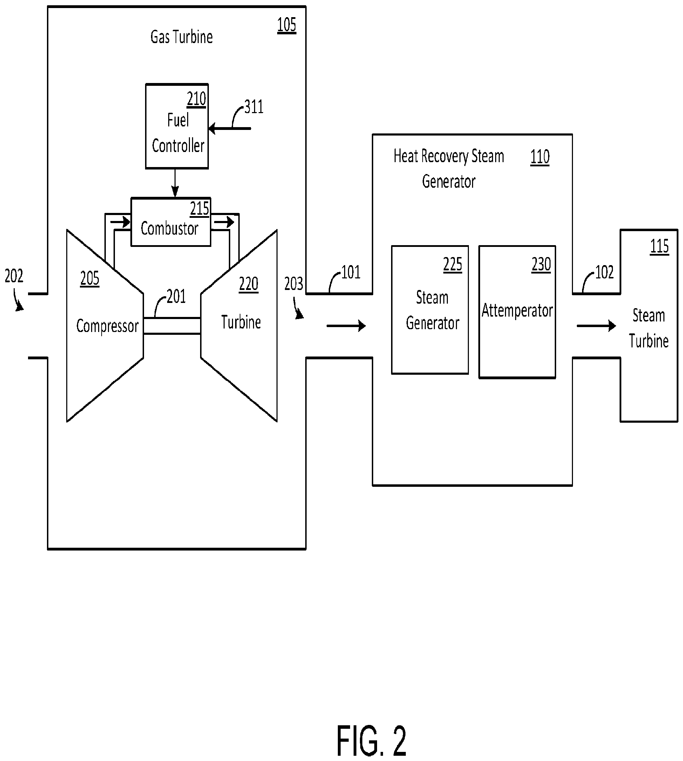

FIG. 2 illustrates some example components of the gas turbine **105** and the heat recovery steam generator **110.** The example components in the gas turbine **105** can include a compressor **205** that receives atmospheric air via an intake port **202** and compresses the air to a higher pressure. The compressed air is fed into a combustor **215,** where fuel provided by a fuel controller **210** is combined with the compressed air, and the air-fuel mixture ignited. The ignited air-fuel mixture generates a high-temperature gas mixture that enters the turbine **220** and expands. The expansion causes turbine blades to rotate or move, thereby rotating a rotary shaft **201.** The rotation of the rotary shaft **201** not only drives the compressor **205** but also drives a generator (not shown) that is coupled to the rotary shaft **201.** The electricity generated by the generator constitutes an electrical power output of the gas turbine that is coupled into a load (not shown), typically via an electric grid system. A portion of the high-temperature gas mixture that is not used for rotating or moving the turbine blades is emitted in the form of exhaust gases via an exhaust port **203** of the gas turbine **105.** The exhaust gases from the exhaust port **203** are conveyed into the heat recovery steam generator **110** via the conduit **101.**

The heat recovery steam generator **110** utilizes the waste heat available in the exhaust gases to generate steam at high pressure and high temperature. The generated steam is conveyed to the steam turbine **115** via the conduit **102** for operating the steam turbine **115.** The heat recovery steam generator **110** can include various components such as a steam generator **225** and an attemperator **230.** The steam generator **225** can include various elements such as a pre-heater, an evaporator, an economizer, a re-heater, and a super-heater. More than one of these elements can be incorporated into the steam generator **225.** The evaporator can be used to vaporize water for producing steam and can include several drums for allowing water to interact with the exhaust gases provided by the gas turbine **105.** The economizer can be used to preheat water (also referred to as feedwater) prior to entry into the evaporators. It is desirable to prevent steam from forming in the one or more economizers. The steam generated in the evaporator is typically saturated steam and this saturated steam is provided to a super-heater for producing dry steam that is used to operate the steam turbine **115.**

The super-heater section of the steam generator **225** typically includes a set of primary and secondary super-heaters. The primary and secondary super-heaters constitute two separate banks of boiler tubes that are used to heat steam to a desired temperature. This temperature determines various operating parameters such as efficiency and protection, of the steam turbine **115.** Consequently, the steam temperature has to be properly controlled. Temperature control is usually achieved by admitting a fine spray of water into the steam generator **225** through the attemperator **230.** The attemperator **230,** which is typically located between the primary and secondary super-heaters, includes a sprayer assembly through which water is sprayed on to the steam when the temperature of the steam is to be decreased. Understandably, lowering the temperature of the steam leads to a reduction in the thermal efficiency of the heat recovery steam generator **110.** Consequently, the control system **120** can be used to optimize the operation of the attemperator **230** to address this issue.

The control system **120** can be further used to control the various elements of the combined cycle power plant **100** to provide for an increased turndown capability of the combined cycle power plant **100** along with an improvement in a combined cycle heat rate generated by the combined cycle power plant **100.** The turndown capability of the combined cycle power plant **100** pertains to a capability of the combined cycle power plant **100** to vary the operation of the gas turbine **105** and/or the steam turbine **115** in response to varying demands of the load coupled to the electrical grid. However, varying the operation of the gas turbine **105,** by turning down the heat rate of operation of the gas turbine **105,** for example, can lead to some adverse effects in the heat recovery steam generator **110** that depends upon the heat characteristics of the exhaust gases provided by the gas turbine **105** to the heat recovery steam generator **110** via the exhaust port **203** and the conduit **101.**

In a traditional combined cycle power plant, the heat recovery steam generator **110** may operate autonomously to vary the spray rate of water in the attemperator **230** (for example, to compensate for the modified heat rate). In some cases, this operation can be based on a pre-determined schedule of operations that is planned ahead of time based on empirical data pertaining to load variations. The pre-determined schedule may be used to operate the gas turbine **105** and the heat recovery steam generator **110** (independent of each other) at certain times of the day, for example. When executed in this independent manner, one criterion for operating the gas turbine **105** can be emission requirements dictated by various regulatory agencies. For example, the gas turbine **105** may be configured to operate during certain times in a manner that reduces emissions to a certain level. Though this action may prove satisfactory for meeting the emission requirements, it may lead to the heat recovery steam generator **110** operating in a less than desired manner. More particularly, the attemperator **230** may continue to operate at a spray rate that does not take into consideration steam saturation and/or super-heating conditions created as a result of modifying the heat rate of the gas turbine **105** so as to operate within emission requirements.

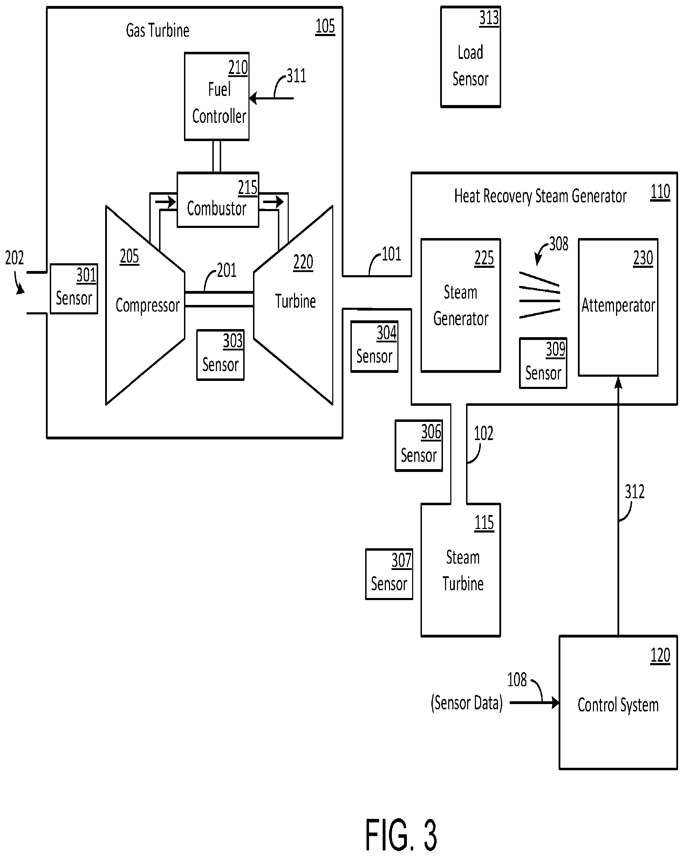

FIG. 3 illustrates some additional example components of the combined cycle power plant **100** in accordance with certain embodiments of the herein claimed invention. The additional example components are various sensors that are located in various places for sensing various operating parameters of the combined cycle power plant **100.** The information gathered by the various sensors is provided to the control system **120** in the form of sensor data that is processed by the control system **120** for generating control signals used for operating various controllers that modify the operating parameters of the combined cycle power plant **100.**

Among the various sensors, the sensor **301** can be a heat sensor that monitors a temperature at the intake port **202.** Sensor **303** can be a speed sensor that monitors the rotational speed of the rotary shaft **201.** Sensor **304** can be a heat sensor that monitors the temperature of the exhaust gas flowing from the turbine **220** to the steam generator **225** via the conduit **101.** The temperature of the exhaust gas can constitute data pertaining to the heat rate of the turbine **220** and this heat rate data can be used by the control system **120** to derive various control signals, such as a fuel control signal that is provided to the fuel controller **210** via a control link **311.** The fuel controller **210** can vary the amount of fuel injected into the combustor **215** so as to modify the exhaust gas temperature and heat rate in a manner determined by the control system **120.** The modification of the heat rate can be further executed by using additional sensor data such as rotational speed data provided by the sensor **303.**

Sensor **306** can be a heat sensor that monitors the temperature of the steam flowing from the heat recovery steam generator **110** to the steam turbine **115** via the conduit **102.** The temperature of the steam can constitute data pertaining to various conditions such as saturation and superheating and this data can be used by the control system **120** to derive various control signals, such as an attemperator control signal that is provided to the attemperator **230** via a control link **312.** The attemperator control signal can be further derived using temperature data provided by a heat sensor **309** that monitors the spray rate of the spray **308** of the attemperator **230.** For example, the control system **120** can detect that the spray rate is inappropriate in view of the steam being superheated and/or at saturation and can suitably tailor the attemperator control signal provided to the attemperator **230.**

A load sensor **313** can be used to continuously monitor loading conditions on the gas turbine **105** and/or the steam turbine **115.** The control system **120** can use load data provided by the load sensor **313** in combination with various other types of data provided by various other sensors. For example, in accordance with some embodiments of the herein claimed invention, the control system **120** can use a holistic method to process the load data provided by the load sensor **313,** the temperature data provided by the sensor **304,** the temperature data provided by the sensor **306,** and the spray rate data provided by the sensor **309,** to generate various control signals, such as the fuel control signal that is provided to the fuel controller **210** and the attemperator control signal that is provided to the attemperator **230.** This arrangement thus allows for operating parameters such as the heat rate of the gas turbine **105,** the steam temperature, and/or the spray rate of the attemperator **230** to be continuously adjusted taking into consideration various interactive behaviors between elements such as the turbine **220,** the steam generator **225,** and the attemperator **230,** thus obtaining a suitable balance between emissions requirements and power generation efficiency, for example.

Furthermore, in one example implementation, the control system **120** is configured to process data provided by the sensor **309** in the attemperator **230** to detect a first spray rate of the spray **308** over a first period of time when the combined cycle power plant **100** is operating under a full load condition. The control system **120** may determine that the first spray rate is inappropriate for obtaining a desired level of efficiency of the combined cycle power plant **100.** Consequently, the control system **120** can provide one or more control signals, such as the fuel control signal that is provided to the fuel controller **210,** in order to modify the exhaust gas temperature and heat rate. The adjusted heat rate can be monitored by the sensor **304** and if found inappropriate, the control system **120** can process data obtained from various other sensors such as the sensor **303,** the sensor **309,** and/or the sensor **306,** to provide one or more additional control signals to further modify the heat rate and/or the first spray rate (without exceeding a maximum capacity of the spray **308).** This procedure can be repeated in a recursive manner in a real-time mode of operation until a desired level of efficiency of the combined cycle power plant **100** is obtained. A similar procedure can be used to obtain a desired efficiency when the combined cycle power plant **100** is operating under various other loads including a full turndown condition.

The control system **120** can also be used to protect the heat recovery steam generator **110** from suffering damage as a result of improper operating conditions. For example, the control system **120** can use data obtained from the various sensors to detect an improper spray rate when the steam generator **225** is operating under a saturation condition and/or a superheated condition, and adjust the spray rate and/or other operating conditions (heat rate, steam temperature, rotational speed etc.) of the combined cycle power plant 100 to protect various components of the heat recovery steam generator **110.**

Additional sensors (not shown) can be provided at various other locations for monitoring various other operating parameters and providing data to the control system **120.** For example, sensors can be provided at one or more of the various stages of the compressor **205** and/or at various extraction valves in the compressor **205.** Thus, data can be obtained for example, from a sensor in an extraction valve in stage 9 of the compressor **205** and from a sensor in an extraction valve in stage 13 of the compressor **205,** and the control system **120** can use this data to modify the operation of the gas turbine **105** and/or other components of the combined cycle power plant **100** for achieving a desired efficiency. Modifying the operation of the gas turbine **105** can include modifying (closing, opening, partially opening etc.) of the various extraction valves, including, in some implementations, bypassing the combustor **215** and one or more sections of the turbine **220.**

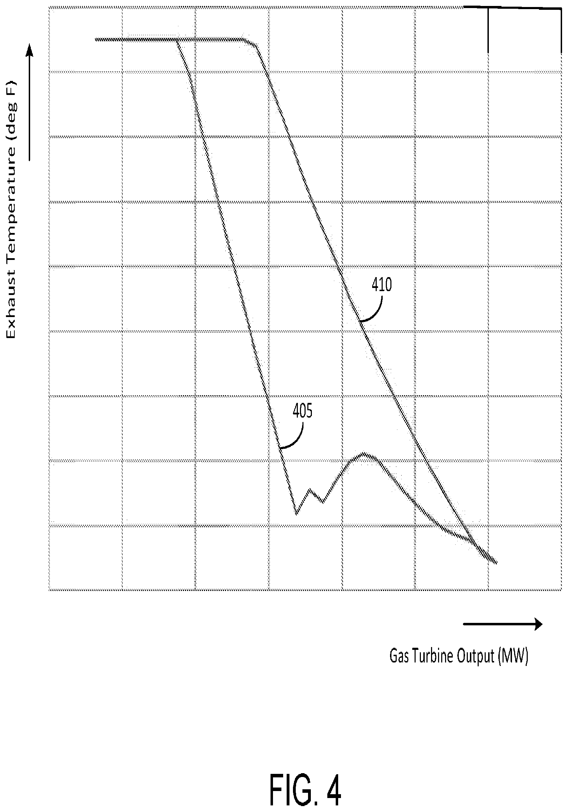

FIG. 4 shows an example graphical representation that illustrates a relationship between electrical power output and allowable exhaust temperatures of the gas turbine **105** that can be a part of the combined cycle power plant **100** in accordance with certain embodiments of the herein claimed invention. Plot **405** indicates various minimum exhaust temperature readings versus electrical power output of the gas turbine **105** without the control system **120** providing any control actions such as would be the case in some traditional combined cycle power plants where various components are controlled independent of each other. In contrast, plot **410** indicates various maximum exhaust temperature readings versus electrical power output of the gas turbine **105** with the control system **120** providing control actions between data associated with plot **405** and data associated with plot **410** in accordance with various embodiments of this invention. As can be seen, the electrical power output along the sloping portion of the plot **410** is relatively higher than that provided by the plot **405** at various gas turbine power outputs, which translates to a relatively higher efficiency of operation.

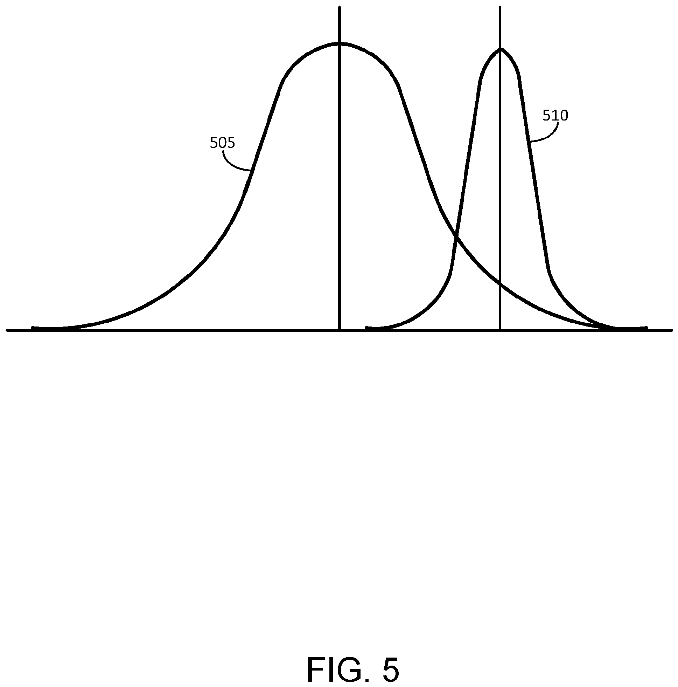

FIG. 5 shows an example graphical representation that includes a plot **505** corresponding to a traditional schedule-based control system and a plot **510** corresponding to a model-based control configuration in accordance with an exemplary embodiment of the invention. The traditional schedule-based control system is typically a static model that is used to set various operating parameters of a combined cycle power plant in a static manner based on a rigid schedule and pre-determined factors. Some examples of pre-determined factors can include known information pertaining to load conditions such as for example, a high load condition during the day time followed by a turndown condition during night time. As a result of this arrangement, large margins have to be used to accommodate worst case swings in one or more of the pre-determined factors, thus causing the combined cycle power plant to operate with relatively low efficiency. Furthermore, in some cases, various control actions have to be executed by human operators, which can be prone to mistakes and oversights.

On the other hand, the model-based control configuration (plot **510)** that is in accordance with an exemplary embodiment of the invention, is a real-time, dynamic model that can be used to set various operating parameters of the combined cycle power plant **100** in a fully-automated manner in response to real-time variations in operating conditions. Various control scenarios, some of which can be based on interactions between two or more components of the combined cycle power plant **100** can be determined ahead of time and incorporated into the control system **120** such that control actions carried out by the control system **120** upon one component does not cause adverse effects on other components. The various control scenarios allow the control system **120** to operate in an autonomous manner without the need for human intervention. The narrower bell curve nature of the plot **510** is indicative of the combined cycle power plant **100** operating with desired margins at a desired efficiency.

In one example implementation of the model-based control configuration, the control system **120** obtains sensor data from the various sensors and a determination is made (either automatically or based on human input) whether to set various operating parameters of the combined cycle power plant **100** to provide a desired efficiency at a particular load or to sacrifice a certain level of efficiency in order to determine the lowest level of turndown that can satisfy emissions compliance. Accordingly, a model-based algorithm can be used in the control system **120** to set limits on various operating parameters of the combined cycle power plant **100.** The various operating parameters can include one or more of the following: steam temperature, exhaust gas temperature, steam saturation point, superheat and/or reheat temperature level in the heat recovery steam generator **110,** superheat and/or reheat outlet saturation point in the heat recovery steam generator **110,** attemperator valve position, combustion dynamics in the gas turbine **105,** and emissions levels for various exhaust gases such as nitrous oxide and carbon monoxide. The various elements that can be operated by the control system **120** for setting these various operating parameters can include the spray **308** in the attemperator **230** and various extraction valves in the gas turbine **105** (such as extraction valves in stages 9, 13 and/or 18 of the compressor **205).**

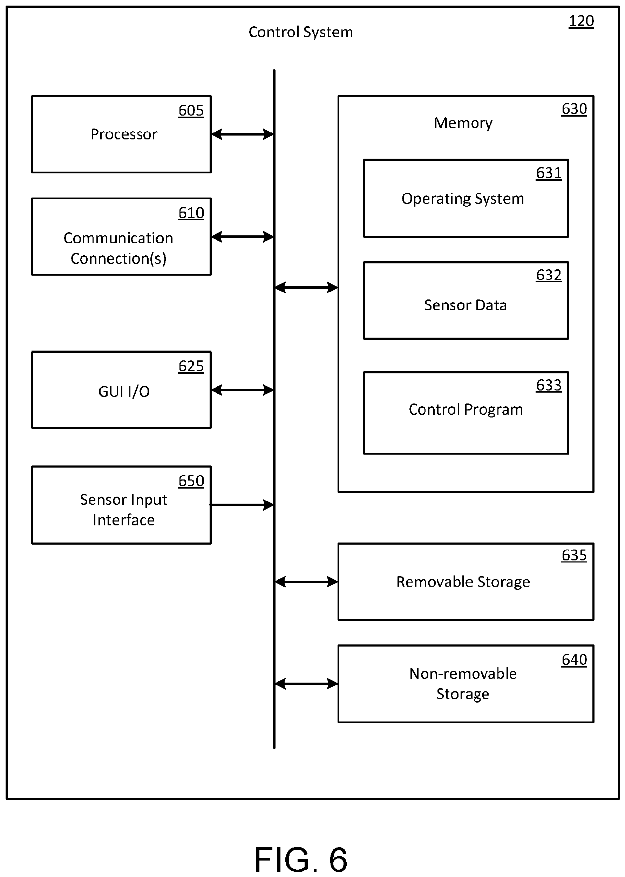

FIG. 6 illustrates an exemplary implementation of the control system **120** in accordance with an exemplary embodiment of the invention. In this exemplary implementation, one or more processors, such as the processor **605,** can be configured to interact with a memory **630.** The processor **605** can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory **630** and executed by the processor **605.**

The memory **630** can be used to store program instructions that are loadable and executable by the processor **605,** as well as to store data for use during the execution of these programs. Such data can include sensor data **632** obtained from the various sensors via a sensor input interface **650.** Depending on the configuration and type of the control system **120,** the memory **630** can be volatile (such as random access memory (RAM)) and/or non-volatile (such as read-only memory (ROM), flash memory, etc.). In some embodiments, the memory devices can also include additional removable storage **635** and/or non-removable storage **640** including, but not limited to, magnetic storage, optical disks, and/or tape storage. The disk drives and their associated computer-readable media can provide non-volatile storage of computer-readable instructions, data structures, program modules, and other data. In some implementations, the memory **630** can include multiple different types of memory, such as static random access memory (SRAM), dynamic random access memory (DRAM), or ROM.

The memory **630,** the removable storage, and the non-removable storage are all examples of non-transient computer-readable storage media. Such non-transient computer-readable storage media can be implemented in any method or technology for storage of information such as computer-readable instructions, data structures, program modules or other data. Additional types of non-transient computer storage media that can be present include, but are not limited to, programmable random access memory (PRAM), SRAM, DRAM, ROM, electrically erasable programmable read-only memory (EEPROM), compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the processor 605. Combinations of any of the above should also be included within the scope of non-transient computer-readable media.

Turning to the contents of the memory **630,** the memory **630** can include, but is not limited to, an operating system (OS) **631** and one or more application programs or services for implementing the features and aspects disclosed herein. Such applications or services can include a control program **633.** When executed by the processor **605,** the control program **633** implements the various functionalities and features described in this invention.

The control system **120** can include one or more communication connections **610** that allows for communication with various devices or equipment capable of communicating with the control system **120.** The connections can be established via various data communication channels or ports, such as USB or COM ports to receive connections for cables connecting the control system **120** to various other devices on a network. In one embodiment, the communication connections **610** may include Ethernet drivers that enable the control system **120** to communicate with other devices on the network. The control system **120** can also include a graphical user input/output interface **625** that allows the control system **120** to be coupled to a suitable display through which a human operator can interact with the control system **120.**

## Claims

1. A combined cycle power plant (100) comprising:
a gas turbine (105);
a heat recovery steam generator (110) coupled to the gas turbine (105), the heat recovery steam generator (110) comprising an attemperator (230) that dispenses a fluid at a spray rate determined by a loading condition of the combined cycle power plant (100);
a steam turbine (115) coupled to the heat recovery steam generator (110), the steam turbine (115) configured to receive steam generated in the heat recovery steam generator (110); and
a control system (120)
**characterized in that** the control system is configured to detect the spray rate and to automatically adjust a heat rate of the combined cycle power plant (100) in accordance with the spray rate and the loading condition of the combined cycle power plant (100).

2. The combined cycle power plant (100) of claim 1, wherein the loading condition includes a full turndown of the combined cycle power plant (100) over a first period of time and a full loading of the combined cycle power plant (100) over a second period of time.

3. The combined cycle power plant (100) of claim 1 or claim 2, wherein the control system (120) automatically communicates with a fuel controller (210) in the gas turbine (105) to modify the exhaust gas temperature and heat rate of the gas turbine (105) when the spray rate corresponds to a saturation limit of steam in the heat recovery steam generator (110).

4. The combined cycle power plant (100) of claim 3, wherein the control system (120) communicates with an attemperator (230) controller to modify the spray rate in the attemperator (230) in accordance with the modified heat rate set by the fuel controller (210).

5. The combined cycle power plant (100) of any preceding claim, further comprising, when dependent upon claim 1 or claim 2 a fuel controller (210), or, when dependent upon either of claims 3 or claim 4, the fuel controller, that controls an amount of fuel provided to the gas turbine (105), in order to adjust the exhaust gas temperature, the control system (120) configured to automatically configure the fuel controller (210) to modify the amount of fuel provided to the gas turbine (105) when a detected spray rate corresponds to a saturation limit of steam in the heat recovery steam generator (110).

6. The combined cycle power plant (100) of any preceding claim, wherein the control system (120) is configured to set the heat rate of the combined cycle power plant (100) based on a selection from within at least one of a specified range of gas turbine (105) operational limits and a specified range of power plant operational limits, the at least one of the specified range of gas turbine (105) operational limits and the specified range of power plant operational limits specified at least in part, on the basis of a range of loading conditions of the combined cycle power plant (100), the range of loading conditions extending from a full load condition to a full turndown condition.

7. A method of operating a combined cycle power plant (100), comprising:
detecting a first spray rate of a fluid in an attemperator (230) when the combined cycle power plant (100) is operating under a full load condition;
operating a control system (120) to set a first heat rate of the combined cycle power plant (100) in accordance with the first spray rate, the first heat rate and the first spray rate allowing the combined cycle power plant (100) to operate in the full load condition and within operating specifications of the combined cycle power plant (100);
detecting a second spray rate of the fluid in the attemperator (230) when the combined cycle power plant (100) is operating under a full turndown condition; and
operating the control system (120) to automatically change the first heat rate of the combined cycle power plant (100) to at least a second heat rate, the second heat rate and the second spray rate allowing the combined cycle power plant (100) to operate in the full turndown condition and within operating specifications of the combined cycle power plant (100).

8. The method of claim 7, wherein the control system (120) is configured to operate in a real-time mode when setting the first heat rate and when changing the first heat rate to the second heat rate.

9. The method of claim 7 or claim 8, wherein the second spray rate corresponds to a degree of superheat above a saturation limit of steam in the attemperator (230), and wherein a combination of the first heat rate and the second spray rate fails to satisfy operating specifications of the combined cycle power plant (100).

10. The method of any of claims 7 to 9, wherein a combination of the second heat rate and the first spray rate is improper for operating the attemperator (230) in accordance with the operating specifications of the combined cycle power plant (100).

11. The method of any of claims 7 to 10, wherein the combined cycle power plant (100) comprises a gas turbine (105) and a heat recovery steam generator (110), and wherein operating the control system (120) to automatically change the first heat rate of the combined cycle power plant (100) to the second heat rate comprises adjusting a rate of fuel provided to the gas turbine (105) or operating one or more compressor extraction valves.

12. The method of any of claims 7 to 11, wherein, when dependent upon any of claims 7 to 10, the combined cycle power plant (100) comprises a gas turbine (105) and a heat recovery steam generator (110), or, when dependent upon claim 11 comprises the gas turbine (105) and the heat recovery steam generator (110) and wherein the method further comprises:
measuring a first temperature at an exhaust port (203) of the heat recovery steam generator (110); and
computing the second heat rate in the control system (120) based at least in part, on the measured first temperature.

13. The method of any of claims 7 to 12, wherein when dependent upon any of claims 7 to 10, the combined cycle power plant (100) comprises a gas turbine (105) and a heat recovery steam generator (110), or, when dependent upon either of claim 11 or claim 12, comprises the gas turbine (105) and the heat recovery steam generator (110) that incorporates the attemperator (230), and wherein the method further comprises:
measuring at least one of an operating parameter of the gas turbine (105) or an operating condition of the heat recovery steam generator (110); and
computing the second heat rate in the control system (120) based at least in part on the at least one of the operating parameter of the gas turbine (105) or the operating condition of the heat recovery steam generator (110).

14. A non-transitory computer-readable storage medium with instructions executable by at least one computer for performing operations comprising:
detecting a first spray rate of a fluid in an attemperator (230) when a combined cycle power plant (100) is operating under a full load condition;
operating a control system (120) to set a first heat rate of the combined cycle power plant (100) in accordance with the first spray rate, the first heat rate and the first spray rate allowing the combined cycle power plant (100) to operate under the full load condition and within operating specifications of the combined cycle power plant (100);
detecting at least a second spray rate of the fluid in the attemperator (230) when the combined cycle power plant (100) is operating under a full turndown condition; and
operating the control system (120) to automatically change the first heat rate of the combined cycle power plant (100) to at least a second heat rate, the second heat rate and the second spray rate allowing the combined cycle power plant (100) to operate under the full turndown condition and within operating specifications of the combined cycle power plant (100).

15. The non-transitory computer-readable storage medium of claim 14 with instructions executable by the at least one computer for performing operations comprising:
adjusting a rate of fuel provided to a gas turbine (105) of the combined cycle power plant (100) to automatically change the first heat rate of the combined cycle power plant (100) to the second heat rate.

## Patentansprüche

1. Kombikraftwerk (100), umfassend:
eine Gasturbine (105);
einen Wärmerückgewinnungsdampfgenerator (110), der mit der Gasturbine (105) gekoppelt ist, der Wärmerückgewinnungsdampfgenerator (110) umfassend einen Einspritzkühler (230), der ein Fluid mit einer Sprührate, die durch einen Belastungszustand des Kombikraftwerks (100) bestimmt wird, abgibt;
eine Dampfturbine (115), die mit dem Wärmerückgewinnungsdampfgenerator (110) gekoppelt ist, wobei die Dampfturbine (115) konfiguriert ist, um Dampf, der in dem Wärmerückgewinnungsdampfgenerator (110) generiert wird, aufzunehmen; und
ein Steuersystem (120),
**dadurch gekennzeichnet, dass** das Steuersystem konfiguriert ist, um die Sprührate zu erfassen und um eine Wärmerate des Kombikraftwerks (100) gemäß der Sprührate und des Belastungszustands des Kombikraftwerks (100) automatisch anzupassen.

2. Kombikraftwerk (100) nach Anspruch 1, wobei der Belastungszustand eine volle Teillast des Kombikraftwerks (100) über einen ersten Zeitraum und ein volles Belasten des Kombikraftwerks (100) über einen zweiten Zeitraum einschließt.

3. Kombikraftwerk (100) nach Anspruch 1 oder 2, wobei das Steuersystem (120) mit einer Brennstoffsteuerung (210) in der Gasturbine (105) automatisch kommuniziert, um die Abgastemperatur und die Wärmerate der Gasturbine (105) zu modifizieren, wenn die Sprührate einer Sättigungsgrenze von Dampf in dem Wärmerückgewinnungsdampfgenerator (110) entspricht.

4. Kombikraftwerk (100) nach Anspruch 3, wobei das Steuersystem (120) mit einer Steuerung des Einspritzkühlers (230) kommuniziert, um die Sprührate in dem Einspritzkühler (230) gemäß der modifizierten Wärmerate, die durch die Brennstoffsteuerung (210) eingestellt wird, zu modifizieren.

5. Kombikraftwerk (100) nach einem der vorstehenden Ansprüche, ferner umfassend, wenn abhängig von Anspruch 1 oder 2, eine Brennstoffsteuerung (210) oder, wenn abhängig von entweder Anspruch 3 oder 4, die Brennstoffsteuerung, die eine Menge an Brennstoff, der der Gasturbine (105) bereitgestellt wird, steuert, um die Abgastemperatur anzupassen, wobei das Steuersystem (120) konfiguriert ist, um die Brennstoffsteuerung (210) automatisch zu konfigurieren, um die Menge an Brennstoff, der der Gasturbine (105) bereitgestellt wird, zu modifizieren, wenn eine erfasste Sprührate einer Sättigungsgrenze von Dampf in dem Wärmerückgewinnungsdampfgenerator (110) entspricht.

6. Kombikraftwerk (100) nach einem der vorstehenden Ansprüche, wobei das Steuersystem (120) konfiguriert ist, um die Wärmerate des Kombikraftwerks (100) basierend auf einer Auswahl aus innerhalb mindestens eines von einem spezifizierten Bereich von Betriebsgrenzen der Gasturbine (105) und einem spezifizierten Bereich von Betriebsgrenzen eines Kraftwerks einzustellen, wobei der mindestens eine von dem spezifizierten Bereich der Betriebsgrenzen der Gasturbine (105) und dem spezifizierten Bereich von Betriebsgrenzen des Kraftwerks mindestens teilweise auf der Basis eines Bereichs von Belastungszuständen des Kombikraftwerks (100) spezifiziert ist, wobei der Bereich von Belastungszuständen sich von einem Zustand voller Belastung zu einem Zustand voller Teillast erstreckt.

7. Verfahren zum Betreiben eines Kombikraftwerks (100), umfassend:
Erfassen einer ersten Sprührate eines Fluids in einem Einspritzkühler (230), wenn das Kombikraftwerk (100) unter einem Zustand voller Belastung in Betrieb ist;
Betreiben eines Steuersystems (120), um eine erste Wärmerate des Kombikraftwerks (100) gemäß der ersten Sprührate einzustellen, wobei die erste Wärmerate und die erste Sprührate es dem Kombikraftwerk (100) ermöglichen, in dem Zustand voller Belastung und innerhalb von Betriebsspezifikationen des Kombikraftwerks (100) in Betrieb zu sein;
Erfassen einer zweiten Sprührate des Fluids in dem Einspritzkühler (230), wenn das Kombikraftwerk (100) unter einem Zustand voller Teillast in Betrieb ist; und
Betreiben des Steuersystems (120), um die erste Wärmerate des Kombikraftwerks (100) auf mindestens eine zweite Wärmerate automatisch zu ändern, wobei die zweite Wärmerate und die zweite Sprührate es dem Kombikraftwerk (100) ermöglichen, in dem Zustand voller Teillast und innerhalb von Betriebsspezifikationen des Kombikraftwerks (100) in Betrieb zu sein.

8. Verfahren nach Anspruch 7, wobei das Steuersystem (120) konfiguriert ist, um in einem Echtzeitmodus in Betrieb zu sein, wenn die erste Wärmerate eingestellt wird und wenn die erste Wärmerate auf die zweite Wärmerate geändert wird.

9. Verfahren nach Anspruch 7 oder 8, wobei die zweite Sprührate einem Grad einer Überhitzung oberhalb einer Sättigungsgrenze von Dampf in dem Einspritzkühler (230) entspricht und wobei eine Kombination der ersten Wärmerate und der zweiten Sprührate versagt, die Betriebsspezifikationen des Kombikraftwerks (100) zu erfüllen.

10. Verfahren nach einem der Ansprüche 7 bis 9, wobei eine Kombination der zweiten Wärmerate und der ersten Sprührate für das Betreiben des Einspritzkühlers (230) gemäß den Betriebsspezifikationen des Kombikraftwerks (100) ungeeignet ist.

11. Verfahren nach einem der Ansprüche 7 bis 10, wobei das Kombikraftwerk (100) eine Gasturbine (105) und einen Wärmerückgewinnungsdampfgenerator (110) umfasst und wobei das Betreiben des Steuersystems (120) zum automatischen Ändern der ersten Wärmerate des Kombikraftwerks (100) auf die zweite Wärmerate ein Anpassen einer Rate an Brennstoff, der der Gasturbine (105) bereitgestellt wird, oder das Betreiben eines oder mehrerer Verdichterentnahmeventile umfasst.

12. Verfahren nach einem der Ansprüche 7 bis 11, wobei, wenn abhängig von einem der Ansprüche 7 bis 10, das Kombikraftwerk (100) eine Gasturbine (105) und einen Wärmerückgewinnungsdampfgenerator (110) umfasst oder, wenn abhängig von Anspruch 11, die Gasturbine (105) und den Wärmerückgewinnungsdampfgenerator (110) umfasst und wobei das Verfahren ferner umfasst:
Messen einer ersten Temperatur an einer Abgasöffnung (203) des Wärmerückgewinnungsdampfgenerators (110); und
Berechnen der zweiten Wärmerate in dem Steuersystem (120) basierend mindestens teilweise auf der gemessenen ersten Temperatur.

13. Verfahren nach einem der Ansprüche 7 bis 12, wobei, wenn abhängig von einem der Ansprüche 7 bis 10, das Kombikraftwerk (100) eine Gasturbine (105) und einen Wärmerückgewinnungsdampfgenerator (110) umfasst oder, wenn abhängig von entweder Anspruch 11 oder 12, die Gasturbine (105) und den Wärmerückgewinnungsdampfgenerator (110), der den Einspritzkühler (230) beinhaltet, umfasst und wobei das Verfahren ferner umfasst:
Messen mindestens eines von einem Betriebsparameter der Gasturbine (105) oder einem Betriebszustand des Wärmerückgewinnungsdampfgenerators (110); und
Berechnen der zweiten Wärmerate in dem Steuersystem (120) basierend mindestens teilweise auf dem mindestens einen von dem Betriebsparameter der Gasturbine (105) oder dem Betriebszustand des Wärmerückgewinnungsdampfgenerators (110).

14. Nichtflüchtiges computerlesbares Speichermedium mit Anweisungen, die durch mindestens einen Computer zum Durchführen von Betrieben ausführbar sind, umfassend:
Erfassen einer ersten Sprührate eines Fluids in einem Einspritzkühler (230), wenn ein Kombikraftwerk (100) unter einem Zustand voller Belastung in Betrieb ist;
Betreiben eines Steuersystems (120), um eine erste Wärmerate des Kombikraftwerks (100) gemäß der ersten Sprührate einzustellen, wobei die erste Wärmerate und die erste Sprührate es dem Kombikraftwerk (100) ermöglichen, unter dem Zustand voller Belastung und innerhalb von Betriebsspezifikationen des Kombikraftwerks (100) in Betrieb zu sein;
Erfassen mindestens einer zweiten Sprührate des Fluids in dem Einspritzkühler (230), wenn das Kombikraftwerk (100) unter einem Zustand voller Teillast in Betrieb ist; und
Betreiben des Steuersystems (120), um die erste Wärmerate des Kombikraftwerks (100) auf mindestens eine zweite Wärmerate automatisch zu ändern, wobei die zweite Wärmerate und die zweite Sprührate es dem Kombikraftwerk (100) ermöglichen, unter dem Zustand voller Teillast und innerhalb von Betriebsspezifikationen des Kombikraftwerks (100) in Betrieb zu sein.

15. Nichtflüchtiges computerlesbares Speichermedium nach Anspruch 14 mit Anweisungen, die durch den mindestens einen Computer zum Durchführen von Betrieben ausführbar sind, umfassend:
Anpassen einer Rate an Brennstoff, der einer Gasturbine (105) des Kombikraftwerks (100) bereitgestellt wird, um die erste Wärmerate des Kombikraftwerks (100) auf die zweite Wärmerate automatisch zu ändern.

## Revendications

1. Centrale électrique à cycle combiné (100), comprenant :
une turbine à gaz (105) ;
un générateur de vapeur à récupération de chaleur (110) accouplé à la turbine à gaz (105), le générateur de vapeur à récupération de chaleur (110) comprenant un désurchauffeur (230) qui distribue un fluide à un taux de pulvérisation déterminé par une condition de charge de la centrale électrique à cycle combiné (100) ;
une turbine à vapeur (115) accouplée au générateur de vapeur à récupération de chaleur (110), la turbine à vapeur (115) étant conçue pour recevoir de la vapeur générée dans le générateur de vapeur à récupération de chaleur (110) ; et
un système de commande (120)
**caractérisée en ce que** le système de commande est configuré pour détecter le taux de pulvérisation et pour ajuster automatiquement un taux de chaleur de la centrale électrique à cycle combiné (100) conformément au taux de pulvérisation et à la condition de charge de la centrale électrique à cycle combiné (100).

2. Centrale électrique à cycle combiné (100) selon la revendication 1, dans laquelle la condition de charge comporte une extinction complète de la centrale électrique à cycle combiné (100) sur une première période de temps et une charge complète de la centrale électrique à cycle combiné (100) sur une seconde période de temps.

3. Centrale électrique à cycle combiné (100) selon la revendication 1 ou la revendication 2, dans laquelle le système de commande (120) communique automatiquement avec un dispositif de commande de carburant (210) dans la turbine à gaz (105) pour modifier la température de gaz d'échappement et le taux de chaleur de la turbine à gaz (105) lorsque le taux de pulvérisation correspond à une limite de saturation de vapeur dans le générateur de vapeur à récupération de chaleur (110).

4. Centrale électrique à cycle combiné (100) selon la revendication 3, dans laquelle le système de commande (120) communique avec un dispositif de commande de désurchauffeur (230) pour modifier le taux de pulvérisation dans le désurchauffeur (230) conformément au taux de chaleur modifié défini par le dispositif de commande de carburant (210).

5. Centrale électrique à cycle combiné (100) selon l'une quelconque revendication précédente, comprenant en outre, lorsqu'elle dépend de la revendication 1 ou de la revendication 2 un dispositif de commande de carburant (210), ou, lorsqu'elle dépend de l'une ou l'autre de la revendication 3 ou la revendication 4, le dispositif de commande de carburant, qui commande une quantité de carburant fournie à la turbine à gaz (105), afin d'ajuster la température de gaz d'échappement, le système de commande (120) étant configuré pour configurer automatiquement le dispositif de commande de carburant (210) pour modifier la quantité de carburant fournie à la turbine à gaz (105) lorsqu'un taux de pulvérisation détecté correspond à une limite de saturation de vapeur dans le générateur de vapeur à récupération de chaleur (110).

6. Centrale électrique à cycle combiné (100) selon l'une quelconque revendication précédente, dans laquelle le système de commande (120) est configuré pour définir le taux de chaleur de la centrale électrique à cycle combiné (100) en fonction d'une sélection parmi au moins l'une d'une plage spécifiée de limites opérationnelles de turbine à gaz (105) et d'une plage spécifiée de limites opérationnelles de centrale électrique, l'au moins une de la plage spécifiée de limites opérationnelles de turbine à gaz (105) et de la plage spécifiée de limites opérationnelles de centrale électrique spécifiée au moins en partie, en fonction d'une plage de conditions de charge de la centrale électrique à cycle combiné (100), la plage de conditions de charge s'étendant d'une condition de charge complète à une condition d'extinction complète.

7. Procédé d'actionnement d'une centrale électrique à cycle combiné (100), comprenant :
la détection d'un premier taux de pulvérisation d'un fluide dans un désurchauffeur (230) lorsque la centrale électrique à cycle combiné (100) fonctionne sous une condition de charge complète ;
l'actionnement d'un système de commande (120) pour définir un premier taux de chaleur de la centrale électrique à cycle combiné (100) conformément au premier taux de pulvérisation, le premier taux de chaleur et le premier taux de pulvérisation permettant à la centrale électrique à cycle combiné (100) de fonctionner dans la condition de charge complète et dans les spécifications opérationnelles de la centrale électrique à cycle combiné (100) ;
la détection d'un second taux de pulvérisation du fluide dans le désurchauffeur (230) lorsque la centrale électrique à cycle combiné (100) fonctionne dans une condition d'extinction complète ; et
l'actionnement du système de commande (120) pour modifier automatiquement le premier taux de chaleur de la centrale électrique à cycle combiné (100) à au moins un second taux de chaleur, le second taux de chaleur et le second taux de pulvérisation permettant à la centrale électrique à cycle combiné (100) de fonctionner dans la condition d'extinction complète et dans les spécifications opérationnelles de la centrale électrique à cycle combiné (100).

8. Procédé selon la revendication 7, dans lequel le système de commande (120) est configuré pour fonctionner dans un mode en temps réel lors de la définition du premier taux de chaleur et lors de la modification du premier taux de chaleur au second taux de chaleur.

9. Procédé selon la revendication 7 ou la revendication 8, dans lequel le second taux de pulvérisation correspond à un degré de surchauffe au-dessus d'une limite de saturation de vapeur dans le désurchauffeur (230), et dans lequel une combinaison du premier taux de chaleur et du second taux de pulvérisation ne satisfait pas les spécifications opérationnelles de la centrale électrique à cycle combiné (100).

10. Procédé selon l'une quelconque des revendications 7 à 9, dans lequel une combinaison du second taux de chaleur et du premier taux de pulvérisation est inadéquate pour faire fonctionner le désurchauffeur (230) conformément aux spécifications opérationnelles de la centrale électrique à cycle combiné (100).

11. Procédé selon l'une quelconque des revendications 7 à 10, dans lequel la centrale électrique à cycle combiné (100) comprend une turbine à gaz (105) et un générateur de vapeur à récupération de chaleur (110), et dans lequel l'actionnement du système de commande (120) pour modifier automatiquement le premier taux de chaleur de la centrale électrique à cycle combiné (100) au second taux de chaleur comprend l'ajustement d'un taux de carburant fourni à la turbine à gaz (105) ou l'actionnement d'une ou plusieurs soupapes d'extraction de compresseur.

12. Procédé selon l'une quelconque des revendications 7 à 11, dans lequel, lorsqu'elle dépend de l'une quelconque des revendications 7 à 10, la centrale électrique à cycle combiné (100) comprend une turbine à gaz (105) et un générateur de vapeur à récupération de chaleur (110), ou, lorsqu'elle dépend de la revendication 11 comprend la turbine à gaz (105) et le générateur de vapeur à récupération de chaleur (110) et dans lequel le procédé comprend en outre :
la mesure d'une première température au niveau d'un orifice d'échappement (203) du générateur de vapeur à récupération de chaleur (110) ; et
le calcul du second taux de chaleur dans le système de commande (120) en fonction au moins en partie, de la première température mesurée.

13. Procédé selon l'une quelconque des revendications 7 à 12, dans lequel lorsqu'elle dépend de l'une quelconque des revendications 7 à 10, la centrale électrique à cycle combiné (100) comprend une turbine à gaz (105) et un générateur de vapeur à récupération de chaleur (110), ou, lorsqu'elle dépend de la revendication 11 ou de la revendication 12, comprend la turbine à gaz (105) et le générateur de vapeur à récupération de chaleur (110) qui incorpore le désurchauffeur (230), et dans lequel le procédé comprend en outre :
la mesure d'au moins l'un parmi un paramètre opérationnel de la turbine à gaz (105) ou une condition opérationnelle du générateur de vapeur à récupération de chaleur (110) ; et
le calcul du second taux de chaleur dans le système de commande (120) en fonction au moins en partie de l'au moins un du paramètre opérationnel de la turbine à gaz (105) ou de la condition opérationnelle du générateur de vapeur à récupération de chaleur (110).

14. Support de stockage non transitoire lisible par ordinateur avec des instructions exécutables par au moins un ordinateur pour effectuer des opérations comprenant :
la détection d'un premier taux de pulvérisation d'un fluide dans un désurchauffeur (230) lorsqu'une centrale électrique à cycle combiné (100) fonctionne sous une condition de charge complète ;
l'actionnement d'un système de commande (120) pour définir un premier taux de chaleur de la centrale électrique à cycle combiné (100) conformément au premier taux de pulvérisation, le premier taux de chaleur et le premier taux de pulvérisation permettant à la centrale électrique à cycle combiné (100) de fonctionner sous la condition de charge complète et dans les spécifications opérationnelles de la centrale électrique à cycle combiné (100) ;
la détection d'au moins un second taux de pulvérisation du fluide dans le désurchauffeur (230) lorsque la centrale électrique au moins à cycle combiné (100) fonctionne dans une condition d'extinction complète ; et
l'actionnement du système de commande (120) pour modifier automatiquement le premier taux de chaleur de la centrale électrique à cycle combiné (100) à au moins un second taux de chaleur, le second taux de chaleur et le second taux de pulvérisation permettant à la centrale électrique à cycle combiné (100) de fonctionner sous la condition d'extinction complète et dans les spécifications opérationnelles de la centrale électrique à cycle combiné (100).

15. Support de stockage non transitoire lisible par ordinateur selon la revendication 14 avec des instructions exécutables par l'au moins un ordinateur pour effectuer des opérations comprenant :
l'ajustement d'un taux de carburant fourni à une turbine à gaz (105) de la centrale électrique à cycle combiné (100) pour modifier automatiquement le premier taux de chaleur de la centrale électrique à cycle combiné (100) au second taux de chaleur.
